# EUROPEAN PATENT APPLICATION

(11) **EP 4 778 903 A1**
(43) Date of publication of application: **22.07.2026**
(21) Application number: 25227752.0
(22) Date of filing: 30.12.2025
(51) Int. Cl.: C04B 28/02, C04B 28/04, C04B 28/10, C04B 28/14

(54) **CONSTRUCTION MATERIAL, METHOD OF MANUFACTURING UPON PROVIDING TEXTILE INDUSTRY WASTEWATER, AND USES THEREOF**

(30) Priority: 30.12.2024 PT 2024119957
(71) Applicant: Oprimee - Innovation Design Engineering Solutions, Lda, 3405-155 Oliveira do Hospital (PT)
(72) Inventor: DOS SANTOS ALMEIDA NUNES, João Miguel, 3405-155 OLIVEIRA DO HOSPITAL (PT)
(74) Representative: Patentree

(57) **Abstract**

The present disclosure relates to a construction material, a method for manufacturing the construction material reusing effluents and wastewater from the textile industry and uses thereof.

It is disclosed a construction material, comprising: a controlled textile effluent and/or wastewater; at least one calcium-based hydraulic binder; at least one aggregate; and wherein the controlled textile effluent complies with the following parameters: pH from 5.5 to 9.5, chemical oxygen demand lower or equal to 1,500 mg O₂/L, biochemical oxygen demand lower or equal 1,000 mg O₂/L, suspended solids lower or equal 1,000 mg/L, and heavy metal concentrations not exceeding 1.0 mg/L Pb, 2.0 mg/L Cr, 0.1 mg/L Cr(VI), 5.0 mg/L Zn and 2.0 mg/L Ni, and wherein the textile effluent partially or totally replaces mixing water and is chemically and physically immobilised within the hardened construction material.

## Description

### TECHNICAL FIELD

The present disclosure relates to a construction material, a method for manufacturing the construction material, such as a paver, or a block, also brick, among others, using effluents and treated wastewater from the textile industry.

### BACKGROUND

The textile industry stands out as a pivotal and swiftly expanding industrial sector in contemporary times. In October 2022, Portugal witnessed a remarkable surge in business volume, registering a substantial 23.13% increase compared to the preceding year. Nevertheless, such as other industrial sectors, textile industry produces a considerable volume of effluents (liquid waste stemming from its manufacturing processes). These effluents are commonly identified by the presence of dyes, finishing chemicals, residues, fibers, and other materials arising from diverse stages of the production process.

The predominant issue associated with these residues stems from the presence of pollutants generated during dyeing, finishing, washing, and printing processes. This is attributed to their vivid coloration (arising from the presence of dyes that were not completely absorbed in the dyeing process), elevated organic content (resulting from compounds used in finishing and dyeing procedures), and, in some cases, the existence of toxic chemical compounds, posing significant environmental concerns. In that sense, the processing of these effluents requires advanced and costly technologies, increasing the economic burden on industries striving to meet environmental compliance standards.

In addition to the significant cost associated with effluent treatment in the textile industry, another challenge arises concerning the lack of applicability of the considerable amount of water resulting from the manufacturing processes of the textile industry.

One of the industries with the highest water demand is the construction industry, as water is essential for producing key construction materials, namely construction elements, such as cement, blocks (also bricks), tiles, and pavers.

Pavers are crafted using a binder, usually cement, which may or may not incorporate lime or other additives; an aggregate, such as sand, which is combined with other materials such as stone powder to fill voids, preventing excessive permeability; and water, which plays a crucial role as a catalyst for chemical reactions in this process. Regarding blocks, the process is no different; it equally requires a binder, such as cement; an aggregate, for instance, sand, that can be provided together with expanded clay or expanded cork; and water.

Pigments play a vital role in the manufacturing of precast pavers and blocks, imparting vibrant and enduring colors. Among the most frequently used pigments, iron oxide stands out for reddish, yellowish, or darker tones; titanium oxide for brighter shades; white calcium carbonate for luminous surfaces; and pigments from synthetic and organic dyes for personalized tones.

The selection of pigments is crucial to ensure uniformity and aesthetic quality. Incorporating these elements into pavers and/ or blocks production enables the creation of visually appealing constructions that meet both functional requirements and the aesthetic preferences of architectural projects. The thoughtful application of pigments, combined with a careful choice of additives, not only achieves the desired coloration but also enhances the strength and durability of pavers and blocks, ensuring quality in every constructed pavement.

A critical technical problem facing both the textile and construction industries is the management and utilization of wastewater. Faced with this scenario, it is imperative to find a solution that benefits not only the textile industry but also the construction sector, since it is undergoing a period of significant growth and requires substantial volumes of water.

The challenge lies in effectively treating and repurposing textile effluents for use in construction, ensuring that the water meets the necessary quality standards to avoid compromising the durability and integrity of construction materials. Additionally, there is the issue of how to incorporate these effluent byproducts into the manufacturing process without introducing toxic chemicals or compromising the performance of the final products. Addressing this problem requires advanced methodologies and an understanding of how textile effluents can be safely integrated into construction applications while maintaining environmental and material performance standards.

These facts are disclosed in order to illustrate the technical problem addressed by the present disclosure.

### GENERAL DESCRIPTION

The present disclosure relates to a construction material, a method for manufacturing the construction material reusing effluents and wastewater from the textile industry and uses thereof.

The present disclosure is able to mitigate environmental impacts as it supports waste valorization and reduces dependency on freshwater resources.

The present disclosure is a novel solution to reuse textile industry effluents and wastewater in the manufacturing of construction materials, namely as precast pavers and blocks, offering both environmental and aesthetic advantages. The textile industry, a rapidly growing sector, generates significant effluents containing dyes, chemicals, and residues. Despite ongoing sustainability efforts, these pollutants persist, requiring effective water treatment systems. Traditional treatment methods-physical, chemical, and biological-are employed to manage effluent composition in accordance with environmental regulations.

The proposed system redirects textile effluents, particularly those in Europe that are free from heavy metals, into the manufacturing of construction materials. The effluent is combined with water (from wastewater), pigments, binders, and aggregates to create construction materials, namely pavers and blocks, contributing to both the sustainability and profitability of the construction sector. Coatings are applied to the pavers or blocks where necessary to ensure enhanced durability and safety, especially in areas of concern.

The materials produced offer a range of applications, including street construction where graffiti or surface dirt can be easily removed by sanding, eliminating the need for repainting. They are also suitable for high-moisture environments prone to fungal growth, replacing chemical treatments with eco-friendly alternatives.

The white default color of the blocks enhances the overall durability of buildings, providing a clear advantage over traditional construction materials. By integrating effluents from the textile industry, this innovation addresses pressing environmental challenges, while promoting sustainable and efficient practices within both the textile and construction industries.

This novel solution not only contributes to the circular economy but also supports the development of more resilient, environmentally-friendly building materials.

In an embodiment, the construction material may further comprise a coating layer.

In an embodiment, the coating layer of the construction material of the present disclosure may be selected from a list consisting of: acrylic coating, polyurethane coating, epoxy coating, silicone coating, water-based paint coating, polymer-based coating, bio-based coating, ceramic coating, natural resin coating, or lime-based coating, among others.

In an embodiment, the coating layer may be a heavy metal-free coating layer.

In an embodiment, the construction material may further comprise a protective layer to improve resistance to environmental factors or enhance safety in sensitive applications.

In an embodiment, the construction material may further comprise a color/pigment, enhancing the aesthetic appeal of architectural projects while promoting resource efficiency.

An aspect of the present disclosure relates to a construction material, comprising: a textile effluent and/or wastewater (1); at least one binder (2); at least one aggregate (3); and optionally, at least one additive and/or a pigment.

An aspect of the present disclosure relates to a construction material, comprising: a controlled textile effluent and/or industrial wastewater (1); at least one calcium-based hydraulic binder (2); at least one aggregate (3); and wherein the controlled textile effluent complies with the following parameters: pH from 5.5 to 9.5, chemical oxygen demand lower or equal to 1,500 mg O₂/L, biochemical oxygen demand lower or equal 1,000 mg O₂/L, suspended solids lower or equal 1,000 mg/L, and heavy metal concentrations not exceeding 1.0 mg/L Pb, 2.0 mg/L Cr, 0.1 mg/L Cr(VI), 5.0 mg/L Zn and 2.0 mg/L Ni, and wherein the textile effluent partially or totally replaces mixing water and is chemically and physically immobilised within the hardened construction material.

In an embodiment, the construction material, further comprises: an internal functional layer comprising a controlled textile effluent, a calcium-based hydraulic binder and aggregates, and an external protective layer having lower permeability than the internal layer, wherein the controlled textile effluent complies with predefined physicochemical and heavy-metal thresholds, and wherein residual constituents of the textile effluent are immobilised within the internal functional layer, and wherein the external protective layer acts as a diffusion barrier limiting migration of said constituents.

In an embodiment, the construction material may be a paver, a block, a brick, a prefabricated facade element, a structural element and/or combinations thereof.

In an embodiment, the binder used in the construction material comprises cement; optionally in combination with lime or other hydraulic binders.

In an embodiment, the aggregate used in the construction material comprises at least one material selected form a list consisting of: sand, stone powder, expanded clay, expanded cork among others, namely, lightweight suitable alternatives.

In an embodiment, the construction material may further comprise a coating layer.

In an embodiment, the coating layer may be selected from a list consisting of: acrylic coating, polyurethane coating, epoxy coating, silicone coating, water-based paint coating, polymer-based coating, bio-based coating, ceramic coating, natural resin coating, or lime-based coating, among others.

In an embodiment, the coating layer may be a heavy metal-free coating layer.

In an embodiment, the construction material may further comprise a protective layer.

In an embodiment, the external protective layer of the construction material exhibits a permeability at least 100 times lower, preferably at least 50 times lower, more preferably at least 10 times lower than that of the internal functional layer.

In an embodiment, the immobilisation of residual constituents in the construction material is demonstrated by leaching tests showing an immobilisation efficiency greater than 95%, preferably greater than 99%.

In an embodiment, the additive may be lime.

In an embodiment, the construction material of the present disclosure has a multilayer structure comprising:
An internal functional layer comprising 10-25 % (w/w) of calcium-based hydraulic binders and 55-80 % (w/w) of mineral aggregates;
An external protective layer comprising 15-35 % (w/w) of a binder, preferably 20-30 % (w/w); 55-80 % (w/w) of a fine aggregate content, preferably 60-75 % (w/w);
Wherein the internal functional layer incorporates 5-20 % (w/w) of a total liquid fraction of water and the textile effluent; and
Wherein the external protective layer incorporates 4-12 % (w/w) of the total liquid fraction, preferably 5-9 % (w/w).

In an embodiment, the external protective layer of the construction material of the previous disclosure has a thickness ranging from 2-80 mm; preferably 2-20 mm.

In an embodiment, the internal functional layer of the construction material of the present disclosure has a thickness ranging from 20-200 mm; preferably 20-80 mm.

In an embodiment, the thickness of the internal functional layer of the construction material of the present disclosure is 70-98% of the total thickness of the construction material; and the thickness of the external protective layer is 2-30% of the total thickness of the construction material.

In an embodiment, the bonding between the external protective layer and the internal functional layer of the construction material of the present disclosure combines chemical and physical adhesion.

In an embodiment, the external protective layer of the construction material of the present disclosure has a permeability 10 times lower, preferably at least 50 times lower, more preferably at least 100 times lower, than that of an internal functional layer, thereby acting as an effective diffusion barrier limiting the migration of water and dissolved constituents from the internal functional layer to the external environment.

In an embodiment, the calcium-based hydraulic binders of the internal functional layer of the construction material of the present disclosure are selected from a list consisting of: Portland cement, blended cement, pozzolanic cement, slag cement, lime-containing hydraulic binders and combinations thereof, preferably Portland cement.

In an embodiment, the mineral aggregates of the internal functional layer of the construction material of the present disclosure are selected from a list consisting of natural sand, crushed sand, stone powder, gravel, limestone aggregates, siliceous aggregates, expanded clay, expanded shale, expanded cork and combinations thereof; preferably natural sand and/or stone powder.

An aspect of the present disclosure relates to the use of the construction material of the present disclosure as a construct pavement.

Another aspect of the present disclosure relates to the use of the construction material of the present disclosure as a wall.

Even another aspect of the present disclosure relates to a method for manufacturing the construction material described in the present disclosure, comprising the following steps: providing the textile industry effluent and wastewater; treating the textile industry effluent and wastewater to meet environmental standards; mixing the treated textile industry with at least one binder and at least one aggregate; moulding the mixture into a construction material using a mould; curing the construction material to achieve desired structural properties.

Another aspect of the present disclosure relates to a method for manufacturing the disclosed construction material, comprising the following steps: providing the textile industry effluent and/or industrial wastewater; treating the textile industry effluent and/or industrial wastewater; conditioning said effluent to comply with predefined physicochemical and heavy-metal acceptance criteria; mixing the conditioned effluent as a total or partial substitute for mixing water with at least one calcium-based hydraulic binder and at least one aggregate; moulding the mixture into a construction material using a mould; curing the construction material such that residual constituents present in the effluent are chemically and physically immobilised within the hardened matrix.

### BRIEF DESCRIPTION OF THE DRAWINGS

The following figures provide preferred embodiments for illustrating the disclosure and should not be seen as limiting the scope of the present disclosure.

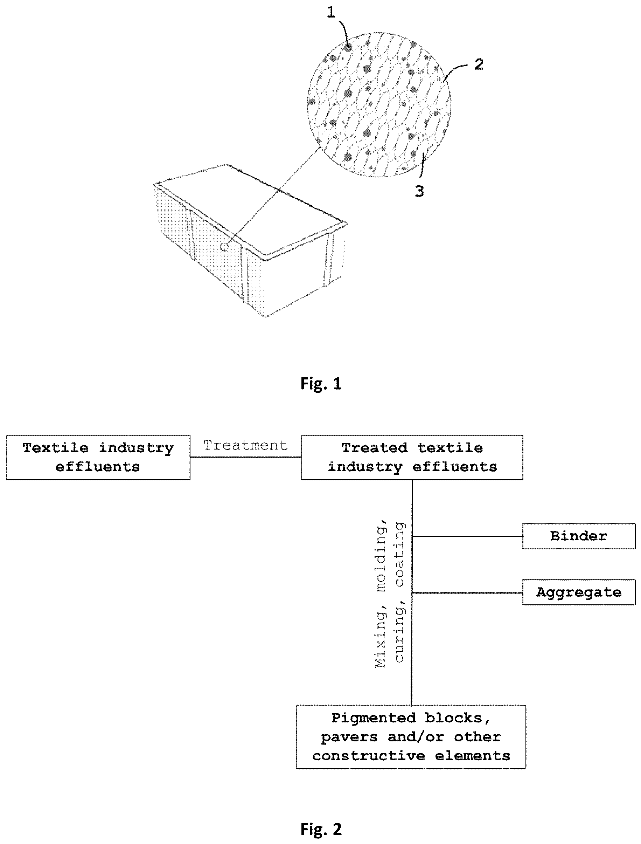

**Figure 1****:** Schematic representation of an embodiment of a construction material construction material reusing effluents and wastewater from the textile industry (1), together with at least one binder (2) and/or at least one aggregate (3), forming an internal functional layer having a structural and encapsulation function, and an external protective layer arranged on the surface of the internal functional layer, the external protective layer having a lower permeability and acting as a barrier to the migration of water and dissolved constituents..
**Figure 2****:** Illustration of a flowchart of the method of manufacturing the construction material of the present disclosure (blocks, pavements, and/or other pigmented construction materials), comprising the steps of supplying and functionally controlling the controlled textile effluent (1), mixing with the binder (2) and the aggregate (3) to form the internal functional layer, moulding and curing the internal functional layer, and applying an external protective layer onto the internal functional layer, either during the initial setting phase ("fresh-on-fresh") or after partial or complete hardening, with differentiated curing conditions for each layer.

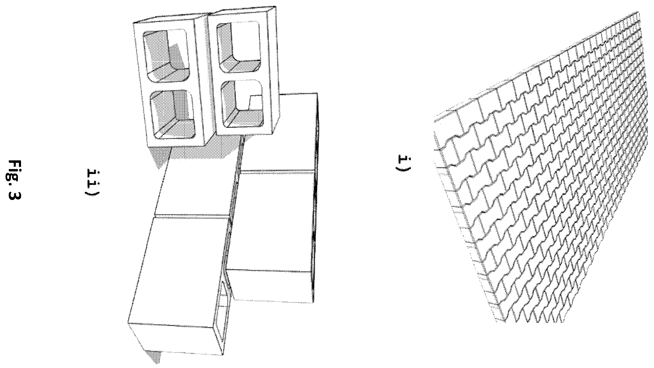

**Figure 3****:** Illustration of two embodiments of the construction material described in the present disclosure namely (i) pavements obtained from prefabricated elements, in which the internal functional layer constitutes the structural body and the external protective layer provides surface resistance; and (ii) construction and/or structural elements obtained from blocks or elements of greater thickness, in which the internal functional layer may have a thickness greater than 120 mm, while the external protective layer is maintained as a durability and environmental safety barrier.

### DETAILED DESCRIPTION

The present disclosure relates to a construction material, a method for manufacturing the construction material reusing effluents and wastewater from the textile industry and uses thereof. Reusing the effluents and wastewater from textile industry into construction materials offers aesthetic, practical, and economic advantages. This integration of effluent reuse into the manufacturing of construction materials addresses environmental challenges while promoting sustainable practices.

In the state of the art, effluents generated by the textile industry, in particular those discharged directly from production lines such as dyeing, washing, finishing and printing operations, are characterised by a high degree of physicochemical variability. This variability depends on several factors, including the type of fibre processed, the industrial processes employed, the chemical formulations used, the bath-to-fabric ratio, and the intensity and number of washing operations applied during manufacture.

In general, raw textile effluents typically exhibit a pH that is frequently alkaline, an elevated organic load, intense coloration, and the residual presence of metals. Such metals are commonly associated with dyes, pigments, mordants or auxiliary agents used in textile processing. This inherent heterogeneity constitutes one of the principal technical challenges for the valorisation and industrial reuse of textile effluents, particularly in applications requiring controlled and predictable material performance.

Raw textile effluents collected at the outlet of production lines may exhibit pH values ranging from moderately acidic to strongly alkaline, typically between about 6.0 and 12.0. Chemical oxygen demand values may range broadly, for example from about 500 mg O₂/L up to 15,000 mg O₂/L, depending strongly on the nature and concentration of dyes and chemical auxiliaries present. Biochemical oxygen demand values may likewise vary widely, for example between about 100 mg O₂/L and 6,000 mg O₂/L, depending on the biodegradability of the organic fraction.

Suspended solids concentrations in raw textile effluents may range from tens of milligrams per litre to several grams per litre, commonly between about 50 mg/L and 3,000 mg/L, and may include fibres, mineral particles and process residues. Apparent colour is often very high and remains a critical parameter even when organic load indicators such as COD are only moderate. Residual metals such as lead, chromium, zinc and nickel may be present in trace to variable concentrations, depending on the specific pigments, dyes, additives and finishing agents employed in the textile process.

These characteristics demonstrate that raw textile effluent is not, by definition, suitable for direct reuse, in particular for applications involving incorporation into construction materials. The wide variability observed indicates that the generic term "textile effluent" is technically insufficient without additional qualifying criteria, that safe reuse requires prior functional and physicochemical control, and that although variability does not preclude valorisation, it necessitates clearly defined acceptance thresholds.

Accordingly, within the scope of the present the present disclosure, a distinction is made between raw textile effluent, controlled textile effluent and non-compatible textile effluent, based on objective and measurable parameters rather than on the origin of the effluent or the specific treatment technology applied.

In the European regulatory context, no single harmonised set of limit values applies uniformly to all textile effluents. Discharge and reuse conditions are generally defined through environmental permitting procedures, taking into account the Industrial Emissions Directive, applicable Best Available Techniques reference documents, and the characteristics of the receiving environment or public sewer network.

Nevertheless, widely recognised reference values are used across European jurisdictions to define technically and environmentally acceptable limits. These limits vary depending on whether the effluent is intended for direct discharge into the receiving environment or for admission into a public sewer network, and focus on the quality of the final effluent rather than on the treatment process used to obtain it.

In particular, acceptable pH values for controlled textile effluents typically fall within a range of about 6.0 to 9.0 for direct discharge, and may be extended to about 5.5 to 9.5 for admission into public sewer systems. Biochemical oxygen demand values are commonly limited to about 40 mg O₂/L for direct discharge and to about 1,000 mg O₂/L for sewer admission. Chemical oxygen demand values are typically limited to about 150 mg O₂/L for direct discharge and to about 1,500 mg O₂/L for sewer admission. Suspended solids concentrations are generally limited to about 60 mg/L for direct discharge and to about 1,000 mg/L for sewer admission.

With regard to metals, European practice commonly applies maximum admissible concentrations of about 1.0 mg/L for lead, about 2.0 mg/L for total chromium, about 0.1 mg/L for hexavalent chromium, and about 2.0 mg/L for nickel. Zinc concentrations are often regulated through local permits, with typical admissible values of up to about 5.0 mg/L for sewer admission.

These regulatory benchmarks demonstrate that the concept of an acceptable textile effluent is functional and outcome-based, rather than being linked to a specific treatment technology. Values significantly higher than those required for direct discharge may be admissible, provided that downstream control and environmental compatibility are ensured.

This regulatory framework supports the approach of the present the present disclosure, according to which the textile effluent is conditioned and controlled but not necessarily treated in a conventional wastewater treatment plant. Reuse in construction materials is envisaged as an alternative management route in which residual constituents are stabilized and immobilized within a solid matrix, such that the determining criterion is functional and environmental compatibility rather than the origin of the effluent or the treatment process employed.

The term "textile effluent" whenever used in this document is intended to indicate wastewater originating from industrial textile processes, including, but not limited to, preparation, washing, dyeing, printing, finishing and auxiliary treatments, irrespective of the type of fibre processed.

The textile effluent considered within the scope of the present disclosure does not necessarily correspond to raw effluent and is not limited to effluent treated in a conventional wastewater treatment plant. Instead, it is defined in functional terms, based on compliance with predefined physicochemical and environmental parameters.

For the purposes of the present disclosure, textile effluents are classified according to their technical and environmental compatibility with incorporation into construction materials. In particular, a distinction is made between a safe textile effluent and a contaminated textile effluent. This classification is independent of the treatment method applied and is based exclusively on the parameters measured in the final effluent.

In at least one preferred embodiment, a safe textile effluent exhibits a pH within a range of about 5.5 to 9.5. The chemical oxygen demand of the effluent is at most about 1,500 mg O₂/L, and the biochemical oxygen demand is at most about 1,000 mg O₂/L. The total solids and suspended solids contents are each at most about 1,000 mg/L, and the electrical conductivity does not exceed about 3,000 µS/cm.

In the same or a further embodiment, the concentrations of heavy metals in the safe textile effluent do not exceed about 1.0 mg/L for lead, about 2.0 mg/L for total chromium, about 0.1 mg/L for hexavalent chromium, about 5.0 mg/L for zinc and about 2.0 mg/L for nickel.

Effluents not meeting one or more of these criteria are classified, within the scope of the present disclosure, as contaminated textile effluents and are excluded from direct incorporation into construction materials unless subjected to additional conditioning or control steps.

In an embodiment of the present disclosure, the textile effluent is subjected to a pre-treatment step prior to its use in the manufacture of construction materials. The pre-treatment is selected as a function of the initial characteristics of the effluent and may include physical operations such as sedimentation, filtration and equalisation, chemical operations such as pH adjustment, coagulation or partial oxidation, biological operations, or combinations thereof. The purpose of such pre-treatment is to condition the textile effluent so that it complies with the predefined physicochemical and environmental parameters required by the present disclosure. In this context, the use of a conventional wastewater treatment plant is not mandatory, provided that the resulting effluent meets the established acceptance criteria. The present disclosure is therefore not limited to any specific treatment technology, but rather to the quality and functional suitability of the conditioned effluent.

In another embodiment, no additional pre-treatment is required. In such cases, the textile effluent, as generated or after minimal conditioning, already exhibits physicochemical parameters falling within the defined admissible limits and may be used directly in accordance with the present disclosure.

For the purposes of the present the present disclosure, a textile effluent is classified as a safe textile effluent when it cumulatively complies with all defined physicochemical parameters and maximum heavy metal concentration limits. Such an effluent is considered functionally compatible with hydraulic binders and with the setting, hardening and curing processes of construction materials.

Conversely, a contaminated textile effluent is defined as an effluent that exceeds at least one of the defined maximum admissible limits, exhibits a pH outside the specified admissible range, or contains one or more heavy metals at concentrations above the established threshold values.

Textile effluents classified as contaminated are not used directly in the present disclosure. However, in certain embodiments, such effluents may be subjected to additional conditioning or pre-treatment operations until they reach the status of a safe textile effluent and become suitable for use in the present disclosure.

A safe textile effluent according to the present disclosure provides multiple technical advantages. In particular, it ensures environmental and human health safety, guarantees chemical compatibility with the hydraulic binder, prevents interference with setting, curing and mechanical strength development, and enables the physical and chemical immobilization of residual constituents within the solid matrix of the construction material.

This approach clearly distinguishes the present the present disclosure from the generic use of wastewater, by ensuring technical control, industrial reproducibility and regulatory compliance, while avoiding any limitation to specific effluent treatment technologies.

In the context of the present disclosure, residual constituents present in the controlled textile effluent are immobilised within the construction material through stable encapsulation mechanisms. The effectiveness of this immobilisation may be demonstrated, in non-limiting embodiments, by reduced leaching values, resistance to prolonged water exposure, and durability under conditions simulating service life, thereby evidencing the stabilisation of heavy metals and other residual species within the solid matrix.

According to the present disclosure, the controlled textile effluent is used as a total or partial substitute for the mixing water conventionally employed in the manufacture of construction materials based on hydraulic binders.

In a preferred embodiment, the total liquid fraction of the construction material, corresponding to the combined amount of water and/or textile effluent, represents up to about 20% by mass of the total composition. Within this fraction, the textile effluent may fully replace the water or may partially replace it in variable proportions. This approach allows adjustment of the rheology, workability and final performance of the construction material, while maintaining environmental and chemical control of the system.

In an embodiment, during hydration of the hydraulic binder and subsequent hardening of the construction material of the present disclosure, a continuous and dense cementitious matrix is formed. Within this matrix, residual constituents potentially present in the controlled textile effluent are immobilised in a stable and durable manner. Immobilisation occurs through combined mechanisms. Physical encapsulation results from the entrapment of contaminants within closed or poorly connected pores of the hardened matrix. Chemical encapsulation results from the incorporation of metal ions into hydrated phases of the binder, including calcium silicate hydrates, hydrated aluminates and calcium hydroxide phases. The initially high alkalinity of the system promotes the precipitation of heavy metals in the form of sparingly soluble hydroxides, which subsequently become integrated into the solid structure of the hardened material.

In an embodiment, the construction material of the present disclosure comprises, by mass, from about 10% to 25% of hydraulic binder, from about 55% to 85% of mineral and/or lightweight aggregates, and up to about 20% of total liquid fraction, comprising water and/or textile effluent. In these embodiments, the textile effluent may partially or totally replace the water. Such proportions ensure adequate hydration of the binder, formation of a matrix with controlled porosity, and effective immobilization of residual contaminants within the construction material.

In an embodiment, leaching tests were carried out on samples of the construction material after curing to demonstrate the effectiveness of encapsulation and immobilization of residual constituents present in the controlled textile.

In an embodiment, leaching tests include solid-liquid contact tests performed in an aqueous medium, leaching tests conducted after prolonged immersion periods, and leaching tests performed after accelerated ageing of the material. These tests are designed to evaluate the stability of immobilization under conditions representative of, or more severe than, normal service conditions.

In an embodiment, the construction material obtained according to the present disclosure exhibits concentrations of heavy metals, including lead, chromium, zinc and nickel, in the leachate that are below applicable regulatory limits or below analytical detection limits. Furthermore, no significant increase in leaching is observed even under prolonged exposure to water. These results demonstrate that residual metals remain both chemically and physically immobilized within the solid matrix of the construction material.

In an embodiment, the stability of encapsulation is further evaluated through durability tests designed to simulate long-term exposure conditions. Such tests include successive cycles of immersion and drying, continuous exposure to humid environments, and tests of water absorption and capillary uptake. Following these durability tests, the construction material of the present disclosure maintains its structural integrity, exhibits mechanical strength values within specified ranges, and shows stable leaching behavior with respect to residual contaminants. This confirms that encapsulation is not merely an initial phenomenon but is maintained throughout the service life of the material.

In an embodiment, the results obtained demonstrate that the use of textile effluent as a total or partial substitute for mixing water does not compromise the mechanical properties of the construction material. On the contrary, residual contaminants are effectively immobilized, and the material simultaneously functions as a construction element and as a passive environmental stabilization system. This technical effect distinguishes the present disclosure from the state of the art, in which wastewater is treated solely for discharge, without material valorization and without permanent fixation of residual constituents in a solid matrix.

In preferred embodiments, the construction material of the present disclosure has a multilayer structure. In such configurations, an internal layer incorporates the textile effluent and ensures encapsulation of residual constituents, while an external layer exhibits reduced permeability and functions as an additional barrier to contaminant migration. This configuration further enhances environmental safety and long-term durability of the material.

In an embodiment, the effectiveness of encapsulation and immobilisation of residual constituents present in the controlled textile effluent is evaluated through systematic leaching tests carried out on cured specimens of the construction material. The tests are designed to simulate and accelerate severe water exposure conditions in order to assess material behaviour over time and under extreme solicitations.

In an embodiment, specimens are subjected to total immersion in water for prolonged periods exceeding those typically used in conventional tests. After immersion, the leachate is collected and analysed, and concentrations of heavy metals, including lead, chromium, zinc and nickel, are determined. The results show that metal release into the aqueous medium is residual or not detectable, with immobilisation efficiencies exceeding 95% when compared with the potentially available concentrations in the initial effluent.

In an embodiment, to reinforce the validity of the results and simulate accelerated ageing conditions, additional tests are performed, including immersion in water at elevated temperature, for example around 50 °C, and the application of ultrasonic energy for controlled periods. These conditions promote increased diffusion, mechanical solicitation of pores and intensification of transport phenomena. Such accelerated conditions represent extreme exposure scenarios and constitute a conservative approach for assessing encapsulation stability.

### Results under accelerated conditions

In an embodiment, even under these severe conditions, the construction material of the present disclosure exhibits immobilisation efficiencies greater than 95% for all analysed metals. In several embodiments, efficiencies approach or exceed 99.9%, with no significant increase in leaching observed over the test duration. These results confirm that residual contaminants remain chemically and physically immobilised within the cementitious matrix, even when subjected to conditions far exceeding normal use scenarios. The high immobilisation efficiency observed results from the combination of several mechanisms. These include initial precipitation of metals in the form of sparingly soluble hydroxides promoted by the alkaline environment, structural incorporation of metal ions into hydrated binder phases, reduction of pore connectivity limiting diffusive transport, and a possible self-sealing effect of the matrix during curing and ageing. The maintenance of extremely low leaching levels, even under ultrasonic agitation and elevated temperature, demonstrates that encapsulation is intrinsic to the structure of the material and not merely superficial.

In an embodiment, leaching tests are also performed after ageing cycles, including repeated immersion and drying cycles, prolonged exposure to humid environments, and maintenance at elevated temperature. After these tests, no relevant degradation of the matrix is observed, immobilisation efficiency remains stable over time, and leaching values remain within the same high-efficiency ranges.

In an embodiment, the construction material of the present disclosure exhibits exceptional environmental stabilization capability. Total or partial substitution of water by controlled textile effluent up to about 20% by mass does not compromise, and may even enhance, contaminant immobilization. Encapsulation efficiency is significantly superior to that observed in conventional wastewater reuse solutions. This technical effect, demonstrated through both normal and accelerated testing, clearly distinguishes the present disclosure from the prior art and supports its safe industrial applicability.

In an embodiment, the present disclosure demonstrates that heavy-metal leaching is negligible even under extreme conditions, that immobilisation efficiency exceeds 95% and may reach 99.9%, and that the construction material acts as a long-term passive environmental confinement system.

In a preferred embodiment, the construction material of the present disclosure comprises, by mass relative to the total composition, from about 10% to 25% hydraulic binder, from about 55% to 80% mineral and/or lightweight aggregates, and from about 5% to 20% total liquid fraction comprising water and/or controlled textile effluent. In specific embodiments, the textile effluent partially or totally replaces the mixing water, and the total liquid fraction is adjusted to ensure adequate workability without compromising mechanical strength.

In an embodiment, the construction material of the present disclosure incorporates selected industrial solid residues to enhance circular-economy performance, including fly ash, granulated slags and compatible mineral residues. These residues may be incorporated in amounts typically ranging from 0% to 20% by mass of the total composition, or higher in specific formulations, and may function as partial substitutes for binder and/or aggregates, as pozzolanic or filler materials, and as agents improving durability and matrix densification.

In a preferred embodiment, the construction material of the present disclosure exhibits compressive strength compatible with both structural and non-structural applications when measured after adequate curing. In another embodiments, compressive strength is at least about 25 MPa for pavement applications and at least about 10 to 20 MPa for blocks and non-structural elements. Depending on formulation, compressive strength values exceeding 40 MPa may be achieved, enabling use in structural elements.

In a preferred embodiment, the apparent density of the construction material of the present disclosure typically ranges from about 1,600 to 2,400 kg/m³, depending on the type of aggregates used, incorporation of lightweight residues, and final matrix porosity.

In a preferred embodiment, the construction material of the present disclosure exhibits abrasion resistance suitable for pavement applications, including pedestrian pavements, urban zones and areas subject to surface wear. Abrasion resistance is comparable to or greater than that of conventional prefabricated materials, with surface integrity maintained even after prolonged use.

In a preferred embodiment, water absorption does not exceed about 6% to 8% by mass, and open porosity does not exceed about 15% to 20%. Porosity is predominantly composed of closed or poorly connected pores, contributing to low permeability, high durability and reduced contaminant leaching.

In a preferred embodiment, the construction material of the present disclosure is subjected to controlled curing to ensure proper development of mechanical and durability properties. In another embodiments, curing is performed under humid or ambient conditions for at least about 7 days, with mechanical properties stabilising after about 14 to 28 days. Accelerated curing may be applied under controlled industrial conditions.

In an embodiment, the construction material of the present disclosure has a multilayer structure comprising an internal functional layer incorporating the textile effluent and an external protective layer of reduced permeability. Typical thicknesses include an internal layer thicker than about 20 mm and an external layer from about 2 mm to 20 mm or more, depending on application. Bonding between layers is ensured by chemical adhesion during curing, a porosity gradient and mineralogical compatibility.

In a preferred embodiment, the chemical composition of the construction material of the present disclosure comprises calcium oxides, silicon oxides, aluminium oxides and hydrated calcium silicate phases. Residual metals potentially present in the textile effluent occur only at vestigial concentrations, are chemically immobilised and are not bioavailable.

In an embodiment, the construction material of the present disclosure is characterised by efficient use of textile effluent as a resource, mechanical and physical performance comparable or superior to the state of the art, high durability and environmental resistance, and proven safety with respect to contaminant leaching.

In an embodiment, the construction material of the present disclosure has a functional multilayer structure designed to separate structural, environmental and protective functions, while ensuring mechanical performance, durability and environmental safety. The multilayer structure comprises at least an internal functional layer configured to incorporate the controlled textile effluent and an external protective layer characterised by reduced permeability and acting as a barrier.

In an embodiment, the construction material of the present disclosure comprises an internal functional layer and an external protective layer and has a total thickness typically from about 30 mm to 120 mm, and in certain applications may be greater than 120 mm, for example in blocks and pavers. In exemplary embodiments, the internal functional layer has a thickness from about 20 mm to 80 mm, corresponding to about 70% to 98% of the total thickness, while the external protective layer has a thickness from about 2 mm to 20 mm, corresponding to about 3% to 30% of the total thickness.

In a preferred embodiment, the construction material of the present disclosure intended for pavements exposed to water and/or abrasion, the external protective layer thickness is from about 4 mm to 10 mm, and the internal functional layer thickness is from about 30 mm to 70 mm.

In an embodiment, the internal functional layer has a thickness from about 20 mm to 80 mm, corresponding typically to about 70% to 95% of the total thickness, and the external protective layer has a thickness from about 2 mm to 10 mm, corresponding to about 5% to 30% of the total thickness. These proportions make it possible to maximise safe incorporation of the controlled textile effluent in the internal layer while providing effective surface protection against water, abrasion and external agents by means of the external layer.

In an embodiment, the construction material of the present disclosure comprising a multilayer structure, wherein the internal functional layer has a chemical composition selected to promote encapsulation and immobilisation. The internal layer comprises predominantly calcium-based hydraulic binders (for example cement), mineral aggregates, and a total liquid fraction consisting of water and/or controlled textile effluent, and may optionally comprise pozzolanic residues such as ash, slag and/or other compatible pozzolans.

In an embodiment, the internal layer exhibits elevated alkalinity during setting and provides high chemical and physical immobilisation capacity for residual constituents potentially present in the controlled textile effluent.

In a typical, non-limiting formulation of the internal functional layer, expressed by mass relative to the internal layer, the hydraulic binder content is from about 10% to 25%, the aggregate content is from about 55% to 80%, and the total liquid fraction (water plus effluent) is from about 5% to 20%, wherein the controlled textile effluent substitutes the water totally or partially. Mineral additions, including ash, slag and/or pozzolans, may be present from about 0% to 20%, for example as partial substitution of the binder and/or as filler.

In a preferred embodiment, the liquid-to-binder ratio (L/B) of the internal layer, defined as (water + effluent) divided by binder, is typically from about 0.25 to 0.55, preferably from about 0.30 to 0.45, in order to control porosity and diffusion while maintaining adequate hydration.

In typical embodiments, the oxide-based chemical composition of the internal layer, dominated by cement and optional mineral additions and expressed as indicative mass percentages of the inorganic fraction, comprises CaO from about 40% to 65%, SiO₂ from about 15% to 30%, Al₂O₃ from about 3% to 12%, Fe₂O₃ from about 1% to 8%, MgO from about 0.5% to 5%, and SO₃ from about 0.5% to 4%. The internal layer is formulated to promote the formation of hydrated binder phases, including calcium silicate hydrate phases and hydrated aluminates, and to maintain an alkaline environment favourable to precipitation and fixation of metals.

In an embodiment, the external protective layer has a composition differentiated from that of the internal layer and is formulated to provide low permeability and high surface resistance. In particular, the external layer is characterised by a lower proportion of textile effluent than the internal layer, or by the absence of textile effluent, and may include binders and additives promoting densification and reduced porosity. In certain embodiments, the external layer optionally includes mineral or polymeric coatings substantially free of heavy metals. In preferred embodiments, the external layer composition is selected such that it does not contain environmentally relevant contaminants.

In a typical, non-limiting formulation of the external protective layer, expressed by mass relative to the external layer, the binder content is from about 15% to 35%, preferably from about 20% to 30%, the fine aggregate content is from about 55% to 80%, preferably from about 60% to 75%, and the liquid fraction is from about 4% to 12%, preferably from about 5% to 9%. Densifying and/or water-repellent additives, such as compatible silicates, compatible polymers and/or microfillers, may be included from about 0.1% to 3.0%. Pigments may be included, when applicable, from about 0% to 5%.

In a preferred embodiment, the liquid-to-binder ratio (L/B) of the external layer is typically from about 0.20 to 0.40, preferably from about 0.22 to 0.32, to reduce porosity and pore connectivity.

In a preferred embodiment, the external layer is produced with 0% textile effluent, or alternatively with not more than about 10% of the liquid fraction originating from textile effluent, thereby ensuring that the exposed surface is chemically stable and free from environmentally relevant contaminants.

In typical embodiments, the oxide-based chemical composition of the external layer, expressed as indicative mass percentages of the inorganic fraction, comprises CaO from about 45% to 70%, SiO₂ from about 12% to 28%, Al₂O₃ from about 2% to 10%, Fe₂O₃ from about 0.5% to 6%, and optionally TiO₂ from about 0% to 5% when pigments and/or whitening agents are used.

In an embodiment, the internal layer preferably comprises aggregates having a maximum particle size Dmax from about 4 mm to 12 mm, for example in pavers and blocks, optionally including fractions such as 0/4 and 4/12. The external layer preferably comprises fine aggregates having Dmax from about 1 mm to 4 mm, preferably 0/2 or 0/4, to obtain a dense, low-porosity surface exhibiting reduced permeability.

In an embodiment, the bonding between the layers is ensured by combined chemical and physical adhesion. This bonding may result, for example, from applying the external layer before the internal layer has completed its setting, enabling partial interpenetration of matrices during curing, mineralogical compatibility between binders of both layers, and optionally controlled interface roughness. This bonding provides structural continuity, prevents delamination and ensures monolithic behaviour of the final element.

In an embodiment, the bond is ensured by one or more of the following mechanisms, alone or in combination. In a "fresh-on-fresh" or "wet-on-wet" approach, the external layer is applied over the internal layer during the initial setting window of the internal layer, typically from about 5 minutes to 90 minutes after moulding the internal layer, preferably from about 10 minutes to 45 minutes, thereby enabling partial interpenetration and co-hydration. In a "wet-on-hard" approach, where the external layer is applied after partial or complete hardening of the internal layer, the surface of the internal layer is prepared to promote mechanical anchoring. In exemplary embodiments, the internal layer surface is provided with a roughness profile corresponding to an average roughness Ra from about 0.3 mm to 1.5 mm, or an equivalent profile, obtained for example by brushing, light blasting or textured moulding. In further embodiments, an intermediate bonding bridge or slurry coat is applied between CI and CE. The bonding bridge may comprise fine binder and water, optionally with additives, and may have a thickness from about 0.2 mm to 1.5 mm, thereby increasing chemical adhesion. In exemplary embodiments, the interlayer bond strength is at least about 1.0 MPa, preferably at least about 1.5 MPa, as determined by an appropriate tensile or pull-off adhesion test.

In an embodiment, the multilayer structure of the construction material of the present disclosure is designed to create a permeability gradient in which the internal layer exhibits controlled porosity suitable for hydration and encapsulation, while the external layer exhibits significantly lower permeability and acts as a diffusion barrier.

Migration of residual constituents from the internal layer to the external layer is prevented or substantially reduced through the combination of chemical immobilisation in the internal layer, reduced pore connectivity, and the physical barrier provided by the external layer.

In preferred embodiments, the internal layer has open porosity not greater than about 20% and water absorption not greater than about 8%. The external layer has open porosity not greater than about 12%, preferably not greater than about 10%, and water absorption not greater than about 6%, preferably not greater than about 5%.

In an embodiment, the external layer is configured to exhibit permeability or hydraulic conductivity significantly lower than that of the internal layer, thereby creating a transport gradient. In preferred embodiments, the permeability/hydraulic conductivity of the external layer is at least about 10 times lower than that of the internal layer, and preferably at least about 100 times lower.

In an alternative or additional embodiment, the external layer is formulated to exhibit a reduced effective ionic diffusion coefficient. In preferred embodiments, the effective diffusion coefficient for ions is not greater than about 1×10⁻¹² m²/s, preferably not greater than about 1×10⁻¹³ m²/s, as assessed by an appropriate test. These values are provided as typical, non-limiting ranges for densified matrices.

In a preferred embodiment, migration control is achieved by a combination of: (i) chemical immobilisation in the internal layer through precipitation and incorporation into hydrated phases such as calcium silicate hydrates and hydrated aluminates; (ii) reduction of pore connectivity through control of the liquid-to-binder ratio and optional microfiller use; (iii) a low-permeability external barrier layer; and (iv) an interfacial barrier, for example a densified bonding bridge, that reduces preferential transport pathways.

In a preferred embodiment, after complete curing and after ageing and/or water exposure testing, the concentration of lead, chromium, zinc and nickel measured in the external layer, for example by chemical analysis of an extract or digestion, remains not greater than about 10% of the corresponding concentration measured in the internal layer. Preferably, this concentration remains not greater than about 5%, more preferably not greater than about 1%. This criterion complements global leaching tests by demonstrating confinement of residual constituents within the internal layer.

In an embodimens, the layers are subjected to differentiated curing conditions. In exemplary embodiments, the internal layer is subjected to humid or ambient curing for at least about 7 days to ensure complete hydration and encapsulation. The external layer may be cured under conditions favouring surface densification, including controlled curing, accelerated curing, and/or application of a final sealant or coating after the initial set.

In representative embodiments, the internal layer is cured under humid or ambient conditions for at least about 7 days, preferably at least about 14 days, with full stabilisation occurring over about 14 to 28 days. The external layer is subjected to curing focused on surface densification, for example controlled curing for at least about 3 days, preferably at least about 7 days, and/or application of a sealant or coating after the initial set.

In certain embodiments, the manufacturing sequence includes applying the external layer over the internal layer in a fresh-on-fresh configuration. In other embodiments, the external layer is applied after partial hardening of the internal layer, optionally with surface preparation and/or a bonding bridge.

In preferred embodiments, the maximum content of contaminants incorporated into the internal layer, resulting from the controlled textile effluent, is limited such that environmental safety is ensured after encapsulation. By way of example, the admissible contaminant content in the internal layer is such that, after curing and leaching testing, release of lead, chromium, zinc and nickel remains below applicable regulatory limits, and the overall immobilisation efficiency exceeds 95%, preferably is at least 99%.

In preferred embodiments, the admissible contaminant content in the internal layer is defined functionally by compliance with the defined effluent classes and by performance verification through leaching and durability tests, wherein the overall immobilisation efficiency is greater than 95% and may reach at least 99.9%, and wherein leaching remains below applicable regulatory limits. Accordingly, the "maximum content" is controlled by a verifiable technical criterion based on final stability and confinement performance, rather than solely by initial composition.

Fig. 1 is a schematic representation of an embodiment of the construction material of the present disclosure manufactured by the method of the present disclosure from the reuse of textile effluents and wastewater treatment (1), combined with at least one binder (2) and/or at least one aggregate (3).

In an embodiment, the effluents used in this process originate from textile industry activities, such as dyeing and finishing. These effluents are treated using physical, chemical, or biological methods to meet environmental standards and eliminate harmful substances. The effluents selected for the process are characterized by low contaminant levels, including the absence of heavy metals, which are typically regulated in Europe.

Fig. 2 depicts an embodiment of the present disclosure outlining the method of manufacturing of the construction material, namely pavers, or blocks and/or other pigmented construction materials. The first step is the collection and treatment of textile industry effluents (1) containing pigments, such as iron oxides or organic dyes, which replace conventional water, contributing to resource conservation. At least one binder (2), such as cement, is then added, optionally with additives like lime, to ensure structural integrity. Additionally, at least one aggregate (3), such as sand or alternative materials like stone powder, is incorporated to fill voids and control permeability.

In an embodiment, the prepared materials are combined in specific proportions and mixed to form a homogeneous slurry. This mixture is poured into moulds designed for producing pavers, blocks, and/ or other construction materials. The moulded elements are then cured under controlled conditions to enhance their durability and mechanical properties.

In an embodiment, in areas exposed to harsh environmental conditions, a protective coating may be applied to further enhance resistance to moisture, abrasion, and potential contaminants.

Fig. 3 illustrates embodiments of the manufactured construction materials of the present disclosure derived from textile effluents and wastewater treatment (1), including street pavements (i) made from pavers, and walls (ii) made from blocks. These construction materials can be used in various contexts, such as:
Urban Infrastructure: Durable and aesthetically pleasing pavers for streets, sidewalks, and plazas.
Building Construction: Blocks with superior moisture resistance for high-humidity environments.
Graffiti-Resistant Surfaces: Pavers or blocks that are easy to clean without the need for repainting.
Drilling and Damage Resistance: Pavers or blocks that maintain their structural integrity even when drilled or subjected to wear.

Some of the key advantages of the present disclosure include environmental benefits, as the efficient reuse of textile effluents helps reduce waste and conserve freshwater resources. Additionally, the process is economically viable, since lower raw material costs contribute to improved profitability in construction. The pigmented products also offer aesthetic customization, meeting diverse architectural requirements, while their durability and safety are enhanced through protective coatings and a robust material composition, ensuring a long-lasting and high-performance solution.

The term "comprising" whenever used in this document is intended to indicate the presence of stated features, integers, steps, components, but not to preclude the presence or addition of one or more other features, integers, steps, components or groups thereof.

The disclosure should not be seen in any way restricted to the embodiments described and a person with ordinary skill in the art will foresee many possibilities to modifications thereof. The above-described embodiments are combinable.

The following dependent claims further set out particular embodiments of the disclosure.

## Claims

1. Construction material, comprising:
a controlled textile effluent and/or industrial wastewater (1);
at least one calcium-based hydraulic binder (2);
at least one aggregate (3); and
wherein the controlled textile effluent complies with the following parameters:
pH from 5.5 to 9.5,
chemical oxygen demand lower or equal to 1,500 mg O₂/L,
biochemical oxygen demand lower or equal 1,000 mg O₂/L,
suspended solids lower or equal 1,000 mg/L, and
heavy metal concentrations not exceeding 1.0 mg/L Pb, 2.0 mg/L Cr, 0.1 mg/L Cr(VI), 5.0 mg/L Zn and 2.0 mg/L Ni,
and wherein the textile effluent partially or totally replaces mixing water and is chemically and physically immobilised within the hardened construction material.

2. Construction material according to the previous claim, further comprising:
an internal functional layer comprising a controlled textile effluent, a calcium-based hydraulic binder and aggregates, and
an external protective layer having lower permeability than the internal layer,
wherein the controlled textile effluent complies with predefined physicochemical and heavy-metal thresholds, and
wherein residual constituents of the textile effluent are immobilised within the internal functional layer, and
wherein the external protective layer acts as a diffusion barrier limiting migration of said constituents.

3. Construction material according to any of the previous claims, wherein the construction material is a paver, a block, a brick, a prefabricated facade element, a structural element and/or combinations thereof.

4. Construction material according to any of the previous claims, wherein the calcium-based hydraulic binder (2) is selected from a list consisting of: Portland cement, blended cement, pozzolanic cement, slag cement, lime-containing hydraulic binders and combinations thereof.

5. Construction material according to any of the previous claims, wherein the aggregate comprises at least one material selected form a list consisting of: natural sand, crushed sand, stone powder, gravel, limestone aggregates, siliceous aggregates, expanded clay, expanded shale, expanded cork and combinations thereof; preferably natural sand and/or stone powder.

6. Construction material according to any of the previous claims, wherein the construction material further comprises a coating layer, preferably wherein the coating layer is selected from a list consisting of: acrylic coating, polyurethane coating, epoxy coating, silicone coating, water-based paint coating, polymer-based coating, bio-based coating, ceramic coating, natural resin coating, or lime-based coating, among others, and combinations thereof, more preferably wherein the coating layer is a heavy metal-free coating layer.

7. Construction material according to any of the previous claims, wherein the external protective layer exhibits a permeability at least 100 times lower, preferably at least 50 times lower, more preferably at least 10 times lower than that of the internal functional layer.

8. Construction material according to any of the previous claims, wherein the additive is lime.

9. Construction material according to any of the previous claims, wherein the construction material comprises a multilayer structure comprising:
An internal functional layer comprising 10-25 % (w/w) of calcium-based hydraulic binders and 55-80 % (w/w) of mineral aggregates;
An external protective layer comprising 15-35 % (w/w) of a binder, preferably 20-30 % (w/w); 55-80 % (w/w) of a fine aggregate content, preferably 60-75 % (w/w);
wherein the internal functional layer incorporates 5-20 % (w/w) of a total liquid fraction of water and the textile effluent; and wherein the external protective layer incorporates 4-12 % (w/w) of the total liquid fraction, preferably 5-9 % (w/w).

10. Construction material according to the previous claim, wherein the external protective layer has a thickness ranging from 2-80 mm; preferably 2-20 mm.

11. Construction material according to any of the previous claims 9-10, wherein the internal functional layer has a thickness ranging from 20-200 mm; preferably 20-80 mm.

12. Use of the construction material according to any of the previous claims 1-11 as a construct pavement.

13. Use of the construction material according to any of the previous claims 1-11 as a wall.

14. Method for manufacturing the construction material according to the previous claims 1-11, comprising the following steps:
providing the textile industry effluent and/or industrial wastewater;
treating the textile industry effluent and/or industrial wastewater;
conditioning said effluent to comply with predefined physicochemical and heavy-metal acceptance criteria;
mixing the conditioned effluent as a total or partial substitute for mixing water with at least one calcium-based hydraulic binder and at least one aggregate;
moulding the mixture into a construction material using a mould;
curing the construction material such that residual constituents present in the effluent are chemically and physically immobilised within the hardened matrix.
